# EUROPÄISCHE PATENTSCHRIFT

(11) **EP 1 645 378 B1**
(45) Veröffentlichungstag und Bekanntmachung des Hinweises auf die Patenterteilung: **07.10.2009**
(21) Anmeldenummer: 05016933.3
(22) Anmeldetag: 04.08.2005
(51) Int. Cl.: B27B 25/00, B27B 7/04, B27B 29/08, B27B 1/00

(54) **Vorrichtung und Verfahren zum Zerlegen von Baumstämmen**
Device and method for cutting-up logs
Dispositif et méthode pour la découpe de troncs d'arbres

(30) Priorität: 11.10.2004 DE 102004049713
(43) Veröffentlichungstag der Anmeldung: 12.04.2006
(73) Patentinhaber: Esterer WD GmbH, 84503 Altötting (DE)
(72) Erfinder:
(74) Vertreter: Witte, Weller & Partner

(56) Entgegenhaltungen:
- DE-A1- 3 714 769
- DE-A1- 4 209 407
- DE-A1- 19 547 193
- DE-C1- 4 038 129
- US-A- 3 180 377

## Beschreibung

Die Erfindung bezieht sich auf eine Vorrichtung zum Zerlegen eines Baumstamms in Holzerzeugnisse, mit einem Längsförderer mit quer zur Förderrichtung schmalen Halteelementen für den Baumstamm, die sich in Längsrichtung des Baumstamms erstrecken und von denen eines von unten und eines von oben am Baumstamm angreift, wobei die Halteelemente zusammen mit dem Baumstamm in Förderrichtung verfahrbar sind, und mit einem relativ zum Längsförderer in Förderrichtung ortsfesten Sägeaggregat zum Zerlegen des Baumstamms, wobei sich der Längsförderer in Förderrichtung durch den von dem Sägeaggregat eingenommenen Bereich der Vorrichtung hindurch erstreckt.

Die Erfindung bezieht sich ferner auf ein Verfahren zum Zerlegen eines Baumstamms in Holzerzeugnisse, bei dem der Baumstamm auf einem Längsförderer gefördert und dabei mittels quer zur Förderrichtung schmalen Halteelementen des Längsförderers die sich in Längsrichtung des Baumstamms erstrecken und von denen eines von unten und eines von oben am Baumstamm angreift, drehfest gehalten wird, wobei ein relativ zum Längsförderer in Förderrichtung ortsfestes Sägeaggregat den Baumstamm zerlegt, und sich der Längsförderer in Förderrichtung durch den von dem Sägeaggregat eingenommenen Bereich der Vorrichtung hindurch erstreckt.

Eine Vorrichtung und ein Verfahren der vorstehend genannten Art sind aus der DE 42 09 407 A1 bekannt.

Diese bekannte Vorrichtung dient zum Zerlegen von Langholz. Das Langholz ruht mit seiner Unterseite auf einem Auflagebalken, der an seiner oberen Auflageseite gezahnt ist, um damit das Langholz sicher und drehfest zu halten. Das Langholz wird an seiner Oberseite von einer Andrückvorrichtung gehalten. Diese besteht aus einem Längsträger sowie gelenkig und federbelastet an dem Längsträger angeordneten Kraftschlussarmen. Der Auflagebalken und der Längsträger sind quer zur Förderrichtung des Langholzes schmal gebaut und gemeinsam in Längsrichtung des Langholzes verfahrbar. Auf diese Weise wird das Langholz über seine gesamte Länge drehfest gehalten und gefördert. Dabei durchläuft das Langholz eine Sägestation, bestehend aus einem Paar von Bandsägen. Die Bandsägen sind quer zur Förderrichtung verfahrbar, um einer Krümmung oder einer Konizität des Langholzes folgen zu können.

Das Langholz kann bei dieser bekannten Vorrichtung die Sägestation auch mehrfach durchlaufen, indem der Auflagebalken und die Andrückvorrichtung nach dem Durchlaufen der Sägestation in einem Rückhub auf ihre Ausgangsposition zurückgefahren werden und die Sägestation dann ein weiteres mal durchlaufen. Die Sägeblätter werden dabei für den weiteren Durchlauf zum Beispiel um eine Brettdicke weiter nach innen verstellt. Auf diese Weise kann der Baumstamm teilweise oder ganz zerlegt werden.

Bei einer weiteren Vorrichtung dieser Art, wie sie in der DE 37 09 240 C2 beschrieben ist, wird ebenfalls ein Längsförderer in quer zur Förderrichtung schmaler Bauart verwendet. Dabei wird das Langholz an dessen Oberseite mittels Spannarmen gehalten, deren freie Enden mit Zackenrädern bestückt sind, um das Langholz sicher und drehfest zu halten. Auch hier wird das Langholz mittels Bandsägen zerteilt und kann dabei in der oben beschriebenen Weise teilweise oder ganz zerlegt werden.

Die beiden vorgenannten Vorrichtungen haben sich in der Praxis bewährt. Sie werden unter dem Produktnamen "ROBOQUAD" von der Anmelderin gebaut und vertrieben. Sie haben jedoch den für alle Bandsägen typischen Nachteil, dass sie nur einen begrenzten Durchsatz an Holz gestatten. Bandsägen sind ferner generell infolge der geringen Dicke der Sägeblätter weniger geeignet, exakt gerade Schnitte in einem Langholz zu erzeugen, insbesondere, wenn sie nicht optimal gewartet werden. Sie müssen auch nach relativ kurzer Einsatzzeit ersetzt und nachgeschärft werden.

Aus der DE 195 47 193 C2 ist es schließlich noch bekannt, in einer Anlage zum Einschneiden eines Baumstamms eine herkömmliche Gattersäge durch ein Doppelwellenkreissägeaggregat zu ersetzen, das in ebenfalls herkömmlicher Weise in Abhängigkeit von dem Konturenverlauf des Baumstamms beim Durchlauf des Baumstamms höhenverstellbar ist. Bei dieser bekannten Vorrichtung wird als Zuführeinrichtung für das Doppelwellenkreissägeaggregat ein Spannwagen verwendet, der den Baumstamm drehfest hält und über eine ortsfeste Auflage an ein Einzugswerk des Doppelwellenkreissägeaggregates übergibt. Das Einzugswerk weist eine horizontale obere und eine horizontale untere Rolle auf. Das nachlaufende Ende des Baumstamms muss infolge dieser Bauweise vom Spannwagen losgelassen werden, bevor es in das Doppelwellenkreissägeaggregat einläuft. Am Ausgang des Doppelwellenkreissägeaggregates ist ein Auszugswerk vorgesehen, das ebenfalls eine horizontale obere und eine horizontale untere Rolle aufweist. Zusätzlich wird das im Doppelwellenkreissägeaggregat entstandene Model an seinen Seitenflächen durch einen Spaltkeil geführt.

Diese bekannte Vorrichtung hat zum einen den Nachteil, dass der Baumstamm während des Durchlaufes durch das Doppelwellenkreissägeaggregat nicht sicher gehalten wird, weil, wie erwähnt, der Spannwagen das nachlaufende Ende vor dessen Eintritt in das Doppelwellenkreissägeaggregat loslassen muss. Damit geht die drehfeste Halterung des Baumstamms auf den letzten Metern des Baumstamms verloren. Dann ist jedoch eine unerwünschte Verdrehung des Baumstamms innerhalb des Doppelwellenkreissägeaggregates möglich. Dies wiederum kann zu einer hohen, unter Umständen unzulässig hohen Belastung des Sägeblätter führen.

Zum anderen erfordert die Verwendung eines Spannwagens zwingend, dass das Doppelwellenkreissägeaggregat mit dem bereits erwähnten Einzugswerk und dem Auszugswerk versehen ist. Dies erhöht die Komplexität der Vorrichtung und damit deren Herstellkosten, Störanfälligkeit und Wartungsbedarf.

Weiterhin muss bei dieser bekannten Vorrichtung der gesamte Zerlegevorgang in einem einzigen Durchlauf des Baumstamms durch das Doppelwellenkreissägeaggregat durchgeführt werden. Sobald nämlich der Baumstamm an seinem hinteren Ende vom Spannwagen freigegeben wurde, geht seine Orientierung relativ zur Längsachse verloren. Bei komplizierten Zerlegevorgängen mit einem entsprechend komplizierten Schnittmuster sind jedoch mehrere Durchgänge erforderlich. Für einen erneuten Durchgang durch das Doppelwellenkreissägeaggregat müsste bei der bekannten Vorrichtung das beim ersten Durchgang erzeugt Model jedoch erneut gespannt und hinsichtlich seiner gesägten Flächen orientiert werden, was zu einem Verlust an Zeit und Genauigkeit führt.

Schließlich ermöglicht der Spannwagen bei dieser bekannten Vorrichtung nur eine taktweise Verarbeitung von Baumstämmen. Wenn nämlich der Spannwagen einen ersten Baumstamm losgelassen hat, muss er zunächst in seine Ausgangsstellung zurückfahren und dort von der Seite einen mittels eines Querförderers angelieferten zweiten Baumstamm übernehmen, spannen und in die richtige Drehposition drehen. Dies führt zu Pausen und damit zu einem intermittierenden Betrieb des Doppelwellenkreissägeaggregates und folglich zu einem verminderten Durchsatz.

Der Erfindung liegt daher die Aufgabe zugrunde, eine Vorrichtung und ein Verfahren der eingangs genannten Art dahingehend weiterzubilden, dass diese Nachteile vermieden werden. Insbesondere soll es möglich werden, mit einer verhältnismäßig einfachen fachen Vorrichtung Langhölzer, d.h. unbearbeitete Baumstämme mit hohem Durchsatz und in hoher Sägequalität zu zerlegen.

Bei einer Vorrichtung der eingangs genannten Art wird diese Aufgabe erfindungsgemäß dadurch gelöst, dass das Sägeaggregat als Doppelwellenkreissägeaggregat ausgebildet ist, bei dem vier fliegend angeordnete Sägeköpfe mit Wellen, an denen jeweils Sätze von Sägeblättern befestigt sind, paarweise übereinander angeordnet sind.

Bei einem Verfahren der eingangs genannten Art wird die Aufgabe erfindungsgemäß dadurch gelöst, dass der Baumstamm mittels eines Doppelwellenkreissägeaggregates zerlegt wird, bei dem vier fliegend angeordnete Sägeköpfe mit Wellen, an denen jeweils Sätze von Sägeblättern befestigt sind, paarweise übereinander angeordnet sind.

Die der Erfindung zugrunde liegende Aufgabe wird auf diese Weise vollkommen gelöst.

Im Vergleich zu den bekannten Anlagen gemäß DE 42 09 407 A1 und DE 37 09 240 C2 wird nämlich infolge der Verwendung eines Doppelwellenkreissägeaggregates ein höherer Durchsatz bei besserer Sägequalität erreicht, weil ein Doppelwellenkreissägeaggregat höhere Schnittgeschwindigkeiten ermöglicht und die Sägeblätter mechanisch stabiler sind.

Im Vergleich zu der Anlage gemäß DE 195 47 193 C2 wird eine Verbesserung der Baumstammführung während des gesamten Sägevorganges und damit eine Verbesserung der Schnittgenauigkeit erreicht, weil der Baumstamm während des gesamten Sägevorganges drehfest gehalten wird. Hierdurch wird auch eine Überlastung der Sägeblätter des Doppelwellenkreissägeaggregates ausgeschlossen. Die erfindungsgemäße Vorrichtung benötigt keinerlei Einzugs- oder Auszugswerk und ist damit einfacher im Bau, im Betrieb und in der Wartung sowie kostengünstiger in der Fertigung. Der Baumstamm kann infolge seiner über die gesamte Länge wirksamen Einspannung mehrfach durch das Doppelwellenkreissägeaggregat gefahren werden, ohne dass sich seine Lage relativ zu diesem verändert. Schließlich ermöglicht die Erfindung bei bestimmten Ausgestaltungen einen kontinuierlichen Betrieb ohne Unterbrechung des Sägevorganges.

Das obere und das untere Halteelement kann erfindungsgemäß in unterschiedlicher Weise ausgebildet werden.

Bei einem ersten Ausführungsbeispiel der Erfindung ist das untere Halteelement als erste verfahrbare Schiene ausgebildet, die vorzugsweise in einer ersten raumfesten Schiene verfahrbar ist.

Dann kann bei einer ersten Variante dieses Ausführungsbeispiels das obere Halteelement als eine Mehrzahl von Haltearmen ausgebildet sein, die um eine quer zur Förderrichtung verlaufende Achse verschwenkbar an einer zweiten verfahrbaren Schiene angeordnet sind, die vorzugsweise in einer zweiten Schiene verfahrbar ist. Die Haltearme können federbelastet verschwenkbar sein.

Diese Maßnahmen haben den Vorteil, dass mit relativ einfachen Mitteln ein durch das Doppelwellenkreissägeaggregat durchlaufender Längsförderer für den Baumstamm zur Verfügung gestellt wird. Der Baumstamm wird dabei an der Oberseite von den Haltearmen gehalten, die ein drehfestes Erfassen des Baumstamms ermöglichen. Infolge der Federbelastung können die Haltearme dabei Baumstämme mit unterschiedlicher Form halten.

Bei einer Weiterbildung dieses Ausführungsbeispiels ist die zweite Schiene in der Höhe einstellbar.

Diese Maßnahme hat den Vorteil, dass Baumstämme unterschiedlichen Durchmessers verarbeitet werden können.

Bei einer zweiten, baulich noch einfacheren Variante ist das obere Halteelement als zweite verfahrbare Schiene ausgebildet.

Bei einem anderen Ausführungsbeispiel der Erfindung sind das untere Halteelement und das obere Halteelement jeweils als endlos aneinander gereihte Förderelemente ausgebildet, wobei das obere Halteelement selbstverständlich auch hier höhenverstellbar ausgebildet sein kann.

Diese Maßnahme hat den Vorteil, dass ein kontinuierlicher Betrieb der Vorrichtung möglich ist, weil die Baumstämme ohne Unterbrechung, d.h. unmittelbar nacheinander auf den Längsförderer aufgegeben werden und das Doppelwellenkreissägeaggregat durchlaufen können.

Weitere Vorteile der Erfindung ergeben sich aus der Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1:: eine äußerst schematisierte Seitenansicht eines Ausführungsbeispiels einer erfindungsgemäßen Vorrichtung; und
- Figur 2:: in etwas vergrößertem Maßstab eine Schnittdarstellung entlang der Linie II-II von Figur 1.

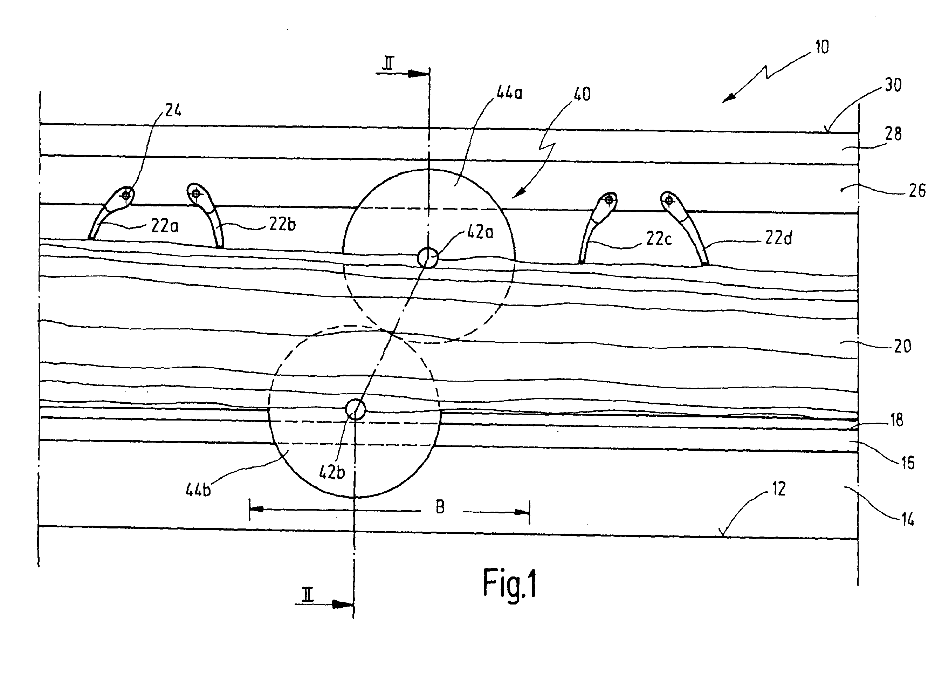

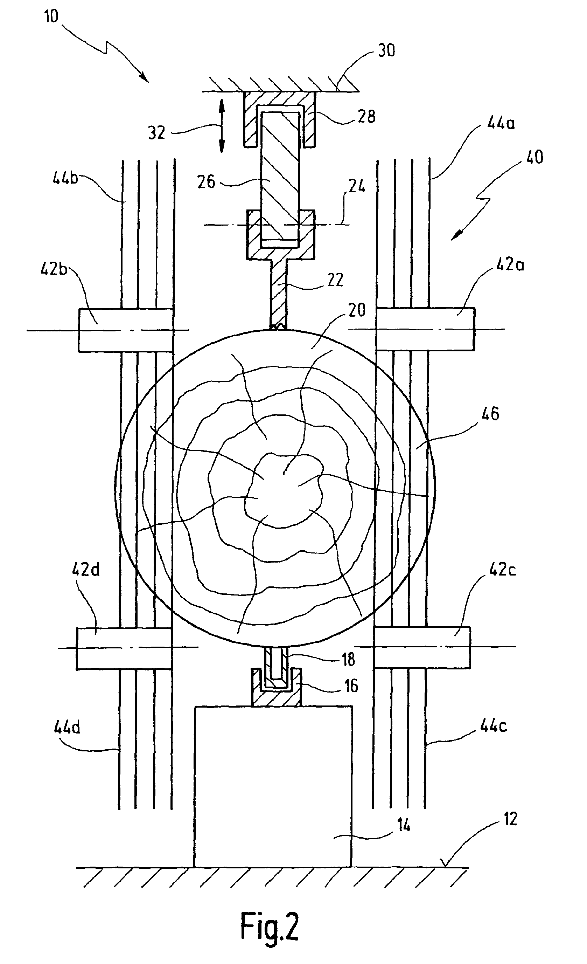

In Figur 1 und 2 bezeichnet 10 als ganzes ein Ausführungsbeispiel einer erfindungsgemäßen Vorrichtung zum Zerlegen von Baumstämmen. Unter "Zerlegen" ist dabei sowohl zu verstehen, dass nur Seitenware vom Baumstamm abgesägt, als auch dass der Baumstamm oder ein Model ganz in Schnittware zerlegt wird.

Die Vorrichtung 10 steht auf einem Boden 12, und zwar mit einem Maschinenbett 14. Auf dem Maschinenbett 14 ist eine erste raumfeste Schiene 16 befestigt. In der ersten raumfesten Schiene 16 läuft eine erste verfahrbare Schiene 18. Die dazu erforderlichen Antriebe und Steuerungen sind dem Fachmann bekannt und daher der Übersichtlichkeit halber in den Figuren nicht dargestellt.

Die erste verfahrbare Schiene 18 dient als Auflage für einen in Längsrichtung zu fördernden Baumstamm 20. Zu diesem Zweck geht die erste verfahrbare Schiene 18 im wesentlichen über die ganze Länge des Baumstamms 20 durch. Sie ist an ihrer Oberseite vorzugsweise gezahnt ausgeführt, um den Baumstamm 20 sicher und drehfest zu halten.

An der Oberseite des Baumstamms 20 greifen Haltearme 22a, 22b, 22c, 22d, usw. an. Die Haltearme 22a, 22b, 22c, 22d, usw. sind in Längsrichtung des Baumstamms 20 bevorzugt paarweise gegenläufig angestellt. Sie sind ebenfalls an ihren Anlageflächen zum Baumstamm 20 vorzugsweise gezackt ausgebildet oder mit Zackenrädern versehen. Die Haltearme 22a, 22b, 22c, 22d, usw. sind jeweils um eine Achse 24 drehbar, die quer zur Längsrichtung des Baumstamms 20 verläuft. Sie sind ferner bevorzugt federbelastet. Damit kann auch ein unregelmäßig geformter Baumstamm 20 sicher gehalten werden. Die Haltearme 22a, 22b, 22c, 22d, usw. sind an einer zweiten verfahrbaren Schiene 26 angelenkt, die in einer zweiten Schiene 28 läuft. Die zweite Schiene 28 ist vorzugsweise relativ zu einer raumfesten Deckenkonstruktion 30 in der Höhe einstellbar, wie mit einem Doppelpfeil 32 angedeutet. Damit können unterschiedliche Durchmesser des Baumstamms 20 berücksichtigt werden.

Auf diese Weise kann der Baumstamm 20 in der Darstellung der Figur 1 von links nach rechts gefördert werden und wird dabei über seine gesamte Länge drehfest gehalten.

Für die vorliegende Erfindung ist es wichtig, dass die vorstehend genannten Elemente 16, 18 und 22 bis 28 sehr schmal ausgelegt sind, also in einer Richtung quer zur Förderrichtung nur minimale Abmessungen aufweisen.

Wenn dabei von "Schienen" die Rede ist, so versteht sich, dass damit alle Arten von für diesen Zweck geeigneten Längsführungen zu verstehen sind.

Die Vorrichtung 10 enthält ferner ein Doppelwellenkreissägeaggregat 40. Das Doppelwellenkreissägeaggregat 40 weist in bekannter Weise vier fliegend angeordnete Sägeköpfe mit Wellen 42a, 42b, 42c und 42d auf an denen jeweils Sätze von Sägeblättern 44a, 44b, 44c und 44d befestigt sind. Die Anordnung ist dabei so gewählt, dass die Sätze von Sägeblättern 44a, 44b, 44c und 44d Seitenware 46 vom Baumstamm 20 absägen oder auch den Baumstamm 20 oder ein daraus bereits erzeugtes Model ganz in Schnittware zersägen.

Die Darstellung des Doppelwellenkreissägeaggregates 40 ist extrem schematisch. Es versteht sich, dass das Doppelwellenkreissägeaggregat 40 mit teleskopartigen Wellen 42a, 42b, 42c und 42d versehen sein kann, um Seitenware 46 unterschiedlicher Dicke absägen bzw. den Baumstamm 20 oder ein Model ganz in Holzerzeugnisse unterschiedlicher Breite zerlegen zu können. Ferner können Fräser (nicht dargestellt) vorgesehen sein, um Baumstammabschnitte großen Durchmessers oder Vorsprünge vorab auszufräsen, die ansonsten mit den Wellen 42a, 42b, 42c und 42d kollidieren würden. Schließlich kann das gesamte Doppelwellenkreissägeaggregat 40 in der Höhe verstellbar sein, um dem Konturenverlauf des Baumstamms 20 zu folgen. All dies ist dem Fachmann bekannt und daher der Übersichtlichkeit halber in der Zeichnung nicht dargestellt.

Wie man aus Figur 1 deutlich ersehen kann, erstreckt sich der Längsförderer mit den oben genannten schmal gebauten Elementen 16, 18 und 22 bis 28 durch einen Bereich B hindurch, der vom Doppelwellenkreissägeaggregat 40 innerhalb der Vorrichtung eingenommen wird. Das Doppelwellenkreissägeaggregat 40 hat im Gegensatz zu der bekannten Vorrichtung aus der DE 195 47 193 C2 weder ein Einzugswerk noch ein Auszugswerk. Der Längsförderer kann sich in bekannter Weise auch gegenläufig bewegen, um den Baumstamm 20 bzw. das aus ihm in einem ersten Durchgang herausgesägte Model ein weiteres mal oder mehrere male durch das Doppelwellenkreissägeaggregat 40 zu führen.

Es versteht sich, dass die vorstehend erläuterten Elemente jeweils nur als Beispiel zu verstehen sind.

Der Längsförderer kann auch in anderer Weise nach einer ersten Variante ausgebildet sein, dadurch, dass als oberes Halteelement ebenfalls eine Schiene verwendet wird.

Besonders bevorzugt ist jedoch eine zweite Variante, bei der sowohl das untere wie auch das obere Halteelement als endlos aneinander gereihte Förderelemente ausgebildet sind. In diesem Fall ist es nämlich möglich, die Baumstämme ohne Unterbrechung auf den Längsförderer aufzugeben. Die Förderelemente können dabei Glieder einer Förderkette sein oder die in der Zeichnung als durchgehende Förderelemente dargestellten Schienen und Halter sind entsprechend segmentiert, so dass sie entlang eines Fördertrums mit einem Baumstamm durch das Doppelwellenkreissägeaggregat mitlaufen und dann parallel zum Fördertrum als Rücklauftrum zurücklaufen. Auch hier sind die oberen Förderelemente vorzugsweise in der Höhe verstellbar.

## Patentansprüche

1. Vorrichtung zum Zerlegen eines Baumstamms (20) in Holzerzeugnisse, mit einem Längsförderer (16, 18, 22 - 28) mit quer zur Förderrichtung schmalen Halteelementen (18, 22) für den Baumstamm (20), die sich in Längsrichtung des Baumstamms (20) erstrecken und von denen eines (18) von unten und eines (22) von oben am Baumstamm (20) angreift, wobei die Halteelemente (18, 22) zusammen mit dem Baumstamm (20) in Förderrichtung verfahrbar sind, und mit einem relativ zum Längsförderer (16, 18, 22 - 28) in Förderrichtung ortsfesten Sägeaggregat zum Zerlegen des Baumstamms (20), wobei sich der Längsförderer (16, 18, 22 - 28) in Förderrichtung durch den von dem Sägeaggregat eingenommenen Bereich (B) der Vorrichtung (10) hindurch erstreckt, **dadurch gekennzeichnet, dass** das Sägeaggregat als Doppelwellenkreissägeaggregat (40) ausgebildet ist, bei dem vier fliegend angeordnete Sägeköpfe mit Wellen, an denen jeweils Sätze von Sägeblättern (44a, 44b, 44c, 44d) befestigt sind, paarweise übereinander angeordnet sind.

2. Vorrichtung nach Anspruch 1, **dadurch gekennzeichnet, dass** das untere Halteelement als erste verfahrbare Schiene (18) ausgebildet ist.

3. Vorrichtung nach Anspruch 2, **dadurch gekennzeichnet, dass** die erste verfahrbare Schiene (18) in einer ersten raumfesten Schiene (16) verfahrbar ist.

4. Vorrichtung nach einem oder mehreren der Ansprüche 1 bis 3, **dadurch gekennzeichnet, dass** das obere Halteelement als eine Mehrzahl von Haltearmen (22a, 22b, 22c, 22d) ausgebildet ist, die um eine quer zur Förderrichtung verlaufende Achse (24) verschwenkbar an einer zweiten verfahrbaren Schiene (26) angeordnet sind.

5. Vorrichtung nach Anspruch 4, **dadurch gekennzeichnet, dass** die zweite verfahrbare Schiene (26) in einer zweiten Schiene (28) verfahrbar ist.

6. Vorrichtung nach Anspruch 5, **dadurch gekennzeichnet, dass** die zweite Schiene (28) in der Höhe einstellbar ist.

7. Vorrichtung nach einem oder mehreren der Ansprüche 4 bis 6, **dadurch gekennzeichnet, dass** die Haltearme (22a, 22b, 22c, 22d) federbelastet verschwenkbar sind.

8. Vorrichtung nach einem oder mehreren der Ansprüche 1 bis 4, **dadurch gekennzeichnet, dass** das obere Halteelement als zweite verfahrbare Schiene ausgebildet sind.

9. Vorrichtung nach Anspruch 1 oder 2, **dadurch gekennzeichnet, dass** das untere Halteelement und das obere Halteelement jeweils als endlos aneinandergereihte Förderelemente ausgebildet sind.

10. Verfahren zum Zerlegen eines Baumstamms (20) in Holzerzeugnisse, bei dem der Baumstamm (20) auf einem Längsförderer (16, 18, 22 - 28) gefördert und dabei mittels quer zur Förderrichtung schmalen Halteelementen (18, 22) des Längsförderers (16, 18, 22 - 28), die sich in Längsrichtung des Baumstamms (20) erstrecken und von denen eines (18) von unten und eines (22) von oben am Baumstamm (20) angreift, drehfest gehalten wird, wobei ein relativ zum Längsförderer (16, 18, 22 - 28) in Förderrichtung ortsfestes Sägeaggregat den Baumstamm (20) zerlegt, und sich der Längsförderer (16, 18, 22 - 28) in Förderrichtung durch den von dem Sägeaggregat eingenommenen Bereich (B) der Vorrichtung (10) hindurch erstreckt, **dadurch gekennzeichnet, dass** der Baumstamm (20) mittels eines Doppelwellenkreissägeaggregates (40) zerlegt wird, bei dem vier fliegend angeordnete Sägeköpfe mit Wellen, an denen jeweils Sätze von Sägeblättern (44a, 44b, 44c, 44d) befestigt sind, paarweise übereinander angeordnet sind.

## Claims

1. Apparatus for dissecting a log (20) into wood products comprising a longitudinal conveyor (16, 18, 22-28) having holder elements (18, 22) for the log (20), the holder elements (18, 22) being narrow transversely to the conveying direction and extending in the longitudinal direction of the log (20), one of the holder elements (18) engaging the log from below and one (22) from above, the holder elements (18, 22) together with the log (20) being adapted to be displaced in the conveying direction, and a saw assembly for dissecting the log (20), the saw assembly being stationary in the conveying direction with regard to the longitudinal conveyor (16, 18, 22-28), wherein the longitudinal conveyor (16, 18, 22-28) extends in the conveying direction through the area (B) occupied by the saw assembly, **characterized in that** the saw assembly is configured as a twin shaft circular saw assembly (40) in which four flying saw heads are arranged one above the other in pairs with shafts to which sets of saw blades (44a, 44b, 44c, 44e, 44d) are each attached.

2. The apparatus of claim 1, **characterized in that** the lower holder element is configured as a first displaceable rail (18).

3. The apparatus of claim 2, **characterized in that** the first displaceable rail (18) is adapted to be displaced within a first stationary rail (16).

4. The apparatus of one or more of claims 1 to 3, **characterized in that** the upper holder element is configured as a plurality of holder arms (22a, 22b, 22c, 22d) being arranged on a second displaceable rail (26) and pivotably about an axis extending transversely to the conveying direction.

5. The apparatus of claim 4, **characterized in that** the second displaceable rail (26) is adapted to be displaced within a second rail (28).

6. The apparatus of claim 5, **characterized in that** the second rail (28) is adapted to be adjusted in height.

7. The apparatus of one or more of claims 4 to 6, **characterized in that** the holder arms (22a, 22b, 22c, 22d) are adapted to be pivoted against the action of a spring.

8. The apparatus of one or more of claims 1 to 4, **characterized in that** the upper holder element is configured as a second displaceable rail.

9. The apparatus of claims 1 or 2, **characterized in that** the lower holder element and the upper holder element are each configured as conveyor elements arranged endlessly one to another.

10. A method for dissecting a log (20) into wood products in which the log (20) is conveyed on a longitudinal conveyor (16, 18, 22-28) and is held fixed against rotation by means of holder elements (18, 22) of the longitudinal conveyor (16, 18, 22-28), the holder elements (18, 22) being narrow transversely to the conveying direction and extending in the longitudinal direction of the log (20), one of the holder elements (18) engaging the log from below and one (22) from above, wherein a saw assembly being stationary in the conveying direction with regard to the longitudinal conveyor (16, 18, 22-28) dissects the log (20), the longitudinal conveyor extending in the conveying direction through the area (B) of the apparatus (10) occupied by the saw assembly, **characterized in that** the log (20) is dissected by a twin shaft circular saw assembly (40) in which four flying saw heads are arranged one above the other in pairs with shafts to which sets of saw blades (44a, 44b, 44c, 44e, 44d) are each attached.

## Revendications

1. Dispositif pour découper un tronc d'arbre (20) en produits en bois, comprenant un convoyeur longitudinal (16, 18, 22 - 28) avec des éléments de retenue étroits (18, 22) transversaux à la direction de transport, pour le tronc d'arbre (20), qui s'étendent dans la direction longitudinale du tronc d'arbre (20) et dont l'un (18) vient en prise par le dessous et l'un (22) par le dessus avec le tronc d'arbre (20), les éléments de retenue (18, 22) pouvant être déplacés avec le tronc d'arbre (20) dans la direction de transport, et comprenant une machine à scier fixée dans la direction de transport par rapport au convoyeur longitudinal (16, 18, 22 - 28), pour découper le tronc d'arbre (20), le convoyeur longitudinal (16, 18, 22 - 28) s'étendant dans la direction de transport à travers la région (B) du dispositif (10) occupée par la machine à scier, **caractérisé en ce que** la machine à scier est réalisée sous forme de machine à scie circulaire à deux arbres (40), quatre têtes de sciage disposées de manière flottante étant disposées par paire les unes sur les autres avec des arbres sur lesquels sont fixés à chaque fois des jeux de lames de scie (44a, 44b, 44c, 44d).

2. Dispositif selon la revendication 1, **caractérisé en ce que** l'élément de retenue inférieur est réalisé sous forme de premier rail déplaçable (18).

3. Dispositif selon la revendication 2, **caractérisé en ce que** le premier rail déplaçable (18) peut être déplacé dans un premier rail fixe (16).

4. Dispositif selon l'une quelconque ou plusieurs des revendications 1 à 3, **caractérisé en ce que** l'élément de retenue supérieur est réalisé sous forme d'une pluralité de bras de retenue (22a, 22b, 22c, 22d), qui sont disposés de manière à pouvoir pivoter autour d'un axe (24) s'étendant transversalement à la direction de transport, sur un deuxième rail déplaçable (26).

5. Dispositif selon la revendication 4, **caractérisé en ce que** le deuxième rail déplaçable (26) peut être déplacé dans un deuxième rail (28).

6. Dispositif selon la revendication 5, **caractérisé en ce que** le deuxième rail (28) peut être réglé en hauteur.

7. Dispositif selon l'une quelconque ou plusieurs des revendications 4 à 6, **caractérisé en ce que** les bras de retenue (22a, 22b, 22c, 22d) peuvent pivoter sous contrainte d'un ressort.

8. dispositif selon l'une quelconque ou plusieurs des revendications 1 à 4, **caractérisé en ce que** l'élément de retenue supérieur est réalisé sous forme de deuxième rail déplaçable.

9. Dispositif selon la revendication 1 ou 2, **caractérisé en ce que** l'élément de retenue inférieur et l'élément de retenue supérieur sont à chaque fois réalisés sous forme d'éléments de transport juxtaposés sans fin.

10. Procédé pour découper un tronc d'arbre (20) en produits en bois, dans lequel le tronc d'arbre (20) est transporté sur un convoyeur longitudinal (16, 18, 22 - 28) et y est maintenu fixe en rotation au moyen d'éléments de retenue étroits (18, 22) du convoyeur longitudinal (16, 18, 22 - 28), transversaux à la direction de transport, qui s'étendent dans la direction longitudinale du tronc d'arbre (20) et dont l'un (18) vient en prise par le dessous et l'un (22) par le dessus avec le tronc d'arbre (20), une machine à scier fixée dans la direction de transport par rapport au convoyeur longitudinal (16, 18, 22 - 28) découpant le tronc d'arbre (20), et le convoyeur longitudinal (16, 18, 22 - 28) s'étendant dans la direction de transport à travers la région (B) du dispositif (10) occupée par la machine à scier, **caractérisé en ce que** le tronc d'arbre (20) est découpé au moyen d'une machine à scie circulaire à deux arbres (40), quatre têtes de sciage disposées de manière flottante étant disposées par paire les unes sur les autres avec des arbres sur lesquels sont fixés à chaque fois des jeux de lames de scie (44a, 44b, 44c, 44d).
